(19) Europäisches Patentamt
European Patent Office
Office européen des brevets

(11) EP 2 475 068 A1

(12) **EUROPEAN PATENT APPLICATION**
published in accordance with Art. 153(4) EPC

(43) Date of publication:
**11.07.2012 Bulletin 2012/28**

(21) Application number: **10819976.1**

(22) Date of filing: **28.09.2010**

(51) Int Cl.:
*H02J 7/35* (2006.01)     *H01M 10/48* (2006.01)
*H02J 3/38* (2006.01)

(86) International application number:
**PCT/IB2010/002430**

(87) International publication number:
**WO 2011/039604 (07.04.2011 Gazette 2011/14)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **02.10.2009 JP 2009230862**

(71) Applicant: **Panasonic Corporation
Kadoma-shi
Osaka 571-8501 (JP)**

(72) Inventor: **SHIOKAWA, Akimi
Osaka 540-6207 (JP)**

(74) Representative: **Müller-Boré & Partner
Patentanwälte
Grafinger Straße 2
81671 München (DE)**

(54) **DEVICE FOR MONITORING SOURCE OF ELECTRIC POWER SUPPLIED TO STORAGE BATTERY IN POWER SUPPLY SYSTEM**

(57)     A device for monitoring power sources of a storage battery includes a monitoring unit for monitoring input and output of power to and from a storage battery; and a power source management unit for managing sources from which amounts of power stored in the storage battery have been obtained and extents to which the amounts of power have been stored in the storage battery.

FIG.2

## Description

Field of the Invention

The present invention relates to an apparatus for monitoring the power sources of a storage battery in a power supply system, which manages individual sources of power stored in a storage battery.

Background of the Invention

A house is provided with a power supply system (see Patent document 1) for converting AC voltage from a commercial power source into DC voltage and supplying the DC voltage to various types of household appliances. Among recent power supply systems, a system has begun to be popularized which is provided with a solar cell for generating power from solar light power generation and which can supply DC power to various types of appliances using not only a commercial power source but also the solar cell. Further, among power supply systems, there are also power supply systems provided with a storage battery as a backup power source for the systems, thus enabling power, which could be generated by a commercial power source in the nighttime when the power rate is low, or which could be generated using solar light in surplus in the daytime, to be reserved in the storage battery.

[Patent Document 1] Japanese Patent Application Publication No. 2009-159690

In this case, in a storage battery, amounts of power from multiple sources, such as power generated from a commercial power source in the nighttime when the power rate is low, or the surplus power of a solar cell remaining after power generation in the daytime, are stored. However, at the present time, the source from which the power stored in the storage battery has been obtained cannot be known. In the future, it is expected that there may be a need to know from which of power sources the power stored in the storage battery has been obtained and how much of the power is stored in the storage battery, so that the development of new technology for coping with such a need has been required.

Summary of the Invention

The present invention has been made keeping in mind the above problems occurring in the prior art, and an object of the present invention is to provide an apparatus for monitoring the power sources of a storage battery in a power supply system, which can determine from which of power sources power stored in a storage battery is obtained and to what extent the power has been stored.

In accordance with an embodiment of the present invention, there is provided a device for monitoring power sources of a storage battery, including: a monitoring unit for monitoring input and output of power to and from a storage battery; and a power source management unit for managing sources from which amounts of power stored in the storage battery have been obtained and extents to which the amounts of power have been stored in the storage battery.

With such configuration, when power is charged in the storage battery, sources from which the power has been input and the extent to which the power has been input from the sources are monitored. When power is output from the storage battery, sources from which the output power has been obtained and the extent to which the power is to be output are monitored. Therefore, the present configuration enables the input and output of power of the storage battery to be managed, so that it is possible to determine from which of sources power stored in the storage battery has been obtained and to what extent the power has been stored. For this reason, whether power stored in the storage battery has been purchased from an electric power company or has been generated from natural energy can be determined, and as a result, consciousness about energy savings can be heightened.

The device for monitoring power sources of the storage battery may be applied to a power supply system which performs voltage conversion on a voltage obtained from a grid or an independently power generating cell, and branches and supplies the voltage to individual appliances, and which is provided with the storage battery as a backup power source of the grid or the independently power generating cell.

With such configuration, since the surplus power remaining in the system can be reversely supplied to the grid when power generated by the independently power generating battery is discharged to the load, a surplus portion of power obtained from independent power generation can be sold. Therefore, for example, since it is impossible to collect power in the storage battery in the nighttime when the power rate is low and sell the power in the daytime where the power rate is high, it is possible to sell the available power that may be sold to an electric power company or the like according to a formal procedure.

The device may further include an independently generated-power residual capacity calculation unit for calculating surplus power, which remains in the power supply system, of power generated by the independently power generating cell; and a power reverse supply unit for reversely supplying the surplus power to the grid.

With such configuration, of the power stored in the storage battery, power supplied from the independently power generating battery as a source can be sold, so that independently generated power which is not a target to be improperly sold can be sold over a preferable time span desired by an electric power company.

According to the present invention, it can be determined from which of sources power stored in the storage battery has been obtained and to what extent the power has been stored.

Brief Description of the Drawings

The objects and features of the present invention will be apparent from the following description of embodiments when taken in conjunction with the accompanying drawings, in which:

Fig. 1 is a block diagram showing the configuration of a power supply system according to an embodiment;
Fig. 2 is a diagram showing the configuration of a system for managing the power sources of a storage battery;
Fig. 3 is a diagram showing the operating status of the system in the daytime;
Fig. 4 is a diagram showing an operating status notification screen;
Fig. 5 is a conceptual diagram showing the status of an operation performed when a surplus portion of solar light-generated power is sold;
Fig. 6 is a conceptual diagram showing the operating status of the system in the nighttime;
Fig. 7 is a conceptual diagram also showing the operating status of the system in the nighttime;
Fig. 8 is a conceptual diagram showing the status when the residual capacity of the storage battery is greatly decreased; and
Fig. 9 is a conceptual diagram showing the status of an operation performed when the storage battery is charged from a grid.

Detailed Description of the Preferred Embodiments

Hereinafter, an embodiment of the present invention will be described with reference to the accompanying drawings which form a part hereof. The same reference numerals will be assigned to the same or similar components throughout the drawings, and redundant descriptions thereof will be omitted.

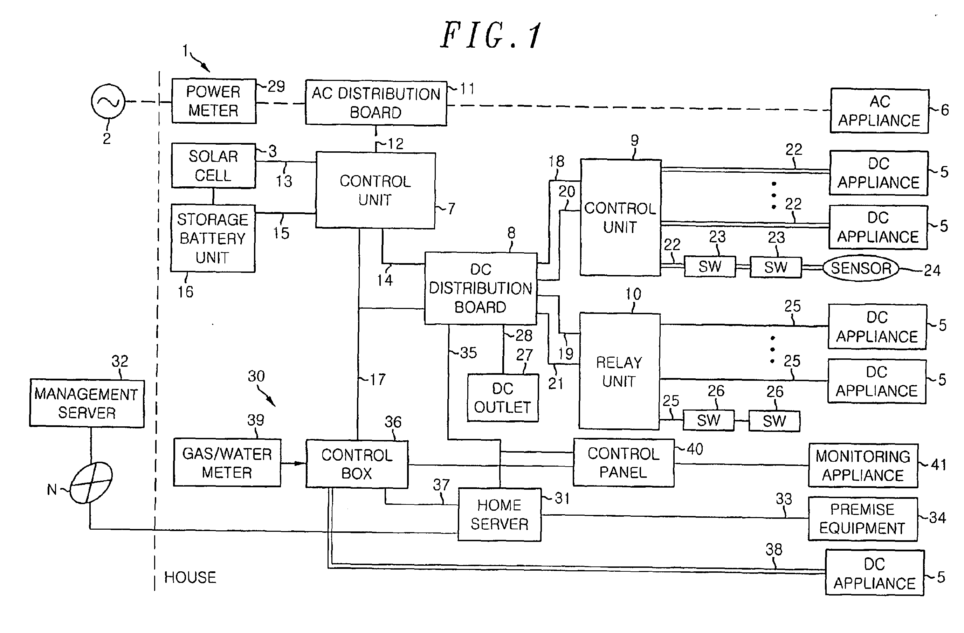

Hereinafter, an embodiment in which an apparatus for monitoring the power sources of a storage battery in a power supply system according to the present invention is embodied in a house will be described with reference to Figs. 1 to 9.

As shown in Fig. 1, a house is provided with a power supply system 1 that supplies power to various types of household appliances (a lighting device, an air conditioner, household electronic appliances, audio and visual appliances, etc.). The power supply system 1 not only operates various types of appliances using a commercial AC power source (AC power source) obtained from a grid 2, as a power source, but also supplies power from a solar cell 3, generated using solar light, to the various types of appliances, as power. The solar cell 3 includes, for example, multiple cells 4. The power supply system 1 supplies power not only to DC appliances 5 configured to receive and be operated by the power of a DC power source but also to an AC appliance 6 configured to receive and be operated by the power of the AC power source. Further, the solar cell 3 corresponds to an independently power generating battery, and the DC appliances 5 and the AC appliance 6 constitute a load.

In the power supply system 1, a control unit 7 and a DC distribution board (containing a DC breaker) 8 are provided as the distribution board of the system 1. Furthermore, in the power supply system 1, a control unit 9 and a relay unit 10 are provided as a device for controlling the operation of the DC appliances 5 of the house.

An AC distribution board 11 for branching AC power is connected to the control unit 7 via an AC power line 12. The control unit 7 is connected to the grid 2 via the AC distribution board 11, and is connected to the solar cell 3 via a DC power line 13. The control unit 7 receives AC power from the AC distribution board 11, receives DC power from the solar cell 3, and converts the power into predetermined DC power, that is, appliance power. Furthermore, the control unit 7 outputs the resulting DC power to the DC distribution board 8 via a DC power line 14, and outputs it to the storage battery unit 16 via a DC power line 15. The control unit 7 receives AC power, converts the DC power of the solar cell 3 or storage battery unit 16 into AC power, and supplies the AC power to the AC distribution board 11. The control unit 7 exchanges data with the DC distribution board 8 via a signal line 17.

The DC distribution board 8 is a kind of breaker for DC power. The DC distribution board 8 branches the DC power input from the control unit 7, and outputs the resulting DC power to the control unit 9 via a DC power line 18, or to the DC relay unit 10 via a DC power line 19. Furthermore, the DC distribution board 8 exchanges data with the control unit 9 via a signal line 20, or with the relay unit 10 via a signal line 21.

The multiple DC appliances 5 are connected to the control unit 9. These DC appliances 5 are connected to the control unit 9 via DC supply lines 22 that are each capable of carrying both DC power and data over a single wire. The DC supply lines 22 each carry both power and data to each of the DC appliances 5 over a single wire using power line communication that superimpose communication signals transmitting data over a high-frequency carrier on DC voltage, that is, power for the DC appliances. The control unit 9 obtains the DC power of the DC appliances 5 via the DC power line 18, and determines which of the DC appliance 5 is to be controlled and how to control the DC appliance 5, based on operating instructions obtained from the DC distribution board 8 via the signal line 20. Furthermore, the control unit 9 outputs DC voltage and operating instructions to the determined DC appliance 5 over the DC supply line 22, and controls the operation of the DC appliance 5.

Switches 23 that are manipulated when the operations of the household DC appliances 5 are switched are connected to the control unit 9 via the DC supply line 22. Furthermore, a sensor 24 for detecting, for example, radio waves transmitted by an infrared remote control is connected to the control unit 9 via the DC supply line 22. Accordingly, the DC appliances 5 are controlled by transmitting communication signals over the DC supply line 22 in response not only to an operating instruction from the DC distribution board 8 but also to the manipulation of the switches 23 or the detection of the sensor 24.

Multiple DC appliances 5 are connected to the relay unit 10 via respective DC power lines 25. The relay unit 10 obtains the DC power of the DC appliances 5 via the DC power line 19, and determines which of the DC appliances 5 is to be operated based on an operating instruction obtained from the DC distribution board 8 via the signal line 21. Furthermore, the relay unit 10 controls the operation of the determined DC appliance 5 in such a way that a contained relay selectively turns on and off the supply of power via the DC power line 25. Furthermore, multiple switches 26 for manually manipulating the DC appliances 5 are connected to the relay unit 10, and the DC appliances 5 are controlled by selectively turning on and off the supply of power over the DC power line 25 using the relay in response to the manipulation of the switches 26.

A DC outlet 27 that is suitably attached to the house, for example, in the form of a wall outlet or a bottom outlet, is connected to the DC distribution board 8 via the DC power line 28. When the plug (not shown) of the DC appliance is inserted into the DC outlet 27, DC power can be directly supplied to the appliance.

Furthermore, a power meter 29 capable of remotely measuring the amount of power of the grid 2 used is connected between the grid 2 and the AC distribution board 11. The power meter 29 is equipped not only with the function of remotely measuring the amount of commercial power used but also with, for example, the function of power line communication or wireless communication. The power meter 29 transmits the results of the measurement to an electric power company or the like via power line communication or wireless communication.

The power supply system 1 is provided with a network system 30 that enables various types of household appliances to be controlled via network communication. The network system 30 is provided with a home server 31 that functions as the control unit of the network system 30. The home server 31 is connected to an external management server 32 via a communication network N, such as the Internet, and also to premise equipment 34 via a signal line 33. Furthermore, the home server 31 operates using DC power, obtained from the DC distribution board 8 via the DC power line 35, as power.

A control box 36 for managing the operational control of various types of home appliances using network communication is connected to the home server 31 via a signal line 37. The control box 36 is connected to the control unit 7 and the DC distribution board 8 via the signal line 17, and may also directly control the DC appliances 5 via a DC supply line 38. A gas/water meter 39 capable of remotely measuring, for example, the amounts of gas or water used is connected to the control box 36 which is in turn connected to the control panel 40 of the network system 30. A monitoring appliance 41 including, for example, a door phone receiver, a sensor or a camera is connected to the control panel 40.

When instructions to operate the various types of home appliances are input via the communication network N, the home server 31 notifies the control box 36 of the instructions, and operates the control box 36 so that the various types of appliances perform operations based on the operating instructions. Furthermore, the home server 31 may provide various types of information, obtained from the gas/water meter 39, to the management server 32 via the communication network N, and, upon receiving notification that the monitoring appliance 41 has detected an abnormality from the control panel 40, may also provide the notification to the management server 32 via the external communication network N.

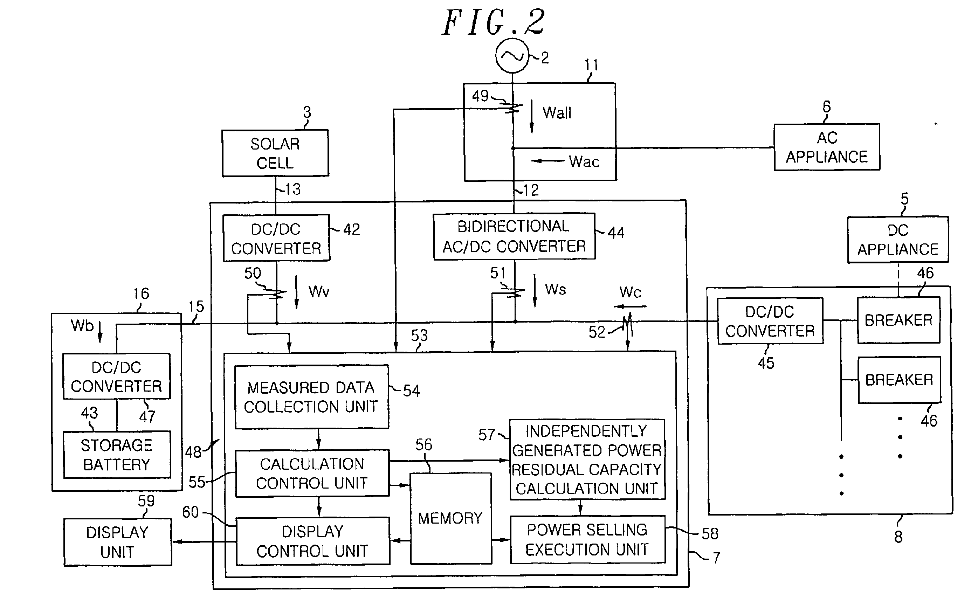

As shown in Fig. 2, the control unit 7 is provided with a DC/DC converter 42 connected to the solar cell 3. The DC/DC converter 42 converts a DC voltage output from the solar cell 3 into a voltage of a predetermined value and outputs the resulting DC voltage to the DC distribution board 8 or the storage battery unit 16. The DC power output to the DC distribution board 8 is supplied to the DC appliances 5 as appliance power. Further, the DC power output to the storage battery unit 16 is stored in the storage battery 43 of the storage battery unit 16.

The control unit 7 is provided with a bidirectional AC/DC converter 44 connected to the AC distribution board 11. The bidirectional AC/DC converter 44 outputs AC power obtained from the grid 2 into DC power and outputs the DC power to the DC distribution board 8 or the storage battery unit 16 or, on the contrary, converts DC power obtained from, for example, the solar cell 3, into AC power and supplies the AC power to the AC distribution board 11.

A DC/DC converter 45 connected to the DC/DC converter 42 and to the bidirectional AC/DC converter 44 is connected to the DC distribution board 8. The DC/DC converter 45 converts the DC voltage obtained from the control unit 7 into a voltage of a predetermined value and outputs the resulting voltage to the various types of DC appliances 5 through breakers 46.

The storage battery unit 16 is provided with a DC/DC converter 47 for converting a DC voltage input and output to and from the unit 16 into a voltage of a predetermined value. The DC/DC converter 47 converts a DC voltage input from the control unit 7 into a voltage of a predetermined value when the storage battery 43 is charged with the DC voltage, or converts the DC voltage of the storage battery 43 into a voltage of a predetermined value when the DC voltage is output to the control unit 7. Further, the DC/DC converter 47 is configured to suitably convert discharge current flowing through the DC/DC converter 47 on the basis of the input voltage.

The power supply system 1 is provided with a storage battery power source management system 48 for managing sources from which amounts of power stored in the storage battery 43 have been obtained. In the present embodiment, the system power sources of the power supply system 1 include the grid 2 and the solar cell 3, so that amounts of power that are supplied from the grid 2 and the solar cell 3, which are sources, are stored in the storage battery 43. Accordingly, the storage battery power source management system 48 manages the extents to which grid power Wall and solar light-generated power Wv are respectively stored in the storage battery 43. Further, the solar light-generated power Wv corresponds to the generated power.

In this case, the AC distribution board 11 is provided with a grid power detection unit 49 for detecting the grid power Wall. Further, the control unit 7 is provided with a solar light-generated power detection unit 50 for detecting power output from the DC/DC converter 42 (hereinafter referred to as "solar light-generated power Wv"), a bidirectional AC/DC power detection unit 51 for detecting power input and output to and from the bidirectional AC/DC converter 44 (hereinafter referred to as "bidirectional AC/DC power Ws"), and a DC usage power detection unit 52 for detecting power used by the DC appliances 5 (hereinafter referred to as "DC usage power Wc"). Furthermore, the power detection units 49 to 52 constitute a monitoring means.

The control unit 7 is provided with a control circuit 53 as the control unit of the storage battery power source management system 48. The control circuit 53 is connected to the individual power detection units 49 to 52, and is configured to calculate input power that is obtained from the grid 2 or the solar cell 3, output power that is supplied to the DC appliances 5 or the AC appliance 6, or storage battery power Wb that is stored in the storage battery 43, on the basis of the detected values obtained from the power detection units 49 to 52.

The control circuit 53 is provided with a measured data collection unit 54 for collecting detected signals output from the respective power detection units 49 to 52. The measured data collection unit 54 collects amounts of power from the individual power detection units 49 to 52 at a polarity in which the direction of arrows in Fig. 2 is a forward direction.

The control circuit 53 is provided with a calculation control unit 55 for calculating various types of power Wall, Wv, Ws, and Wc on the basis of the detected signals output from the measured data collection unit 54. The calculation control unit 55 detects grid power Wall based on the detected signal output from the grid power detection unit 49, solar light-generated power Wv based on the detected signal output from the solar light-generated power detection unit 50, bidirectional AC/DC power Ws based on the detected signal output from the bidirectional AC/DC power detection unit 51, and DC usage power Wc based on the detected signal output from the DC usage power detection unit 52. Further, the power used by the AC appliance 6 (AC usage power Wac) is calculated by subtracting the bidirectional AC/DC power Ws from the grid power Wall. Furthermore, the measured data collection unit 54 and the calculation control unit 55 constitute a power source management means.

The calculation control unit 55 calculates storage battery power Wb to be supplied to the storage battery 43 based on the various types of power Wall, Wv, Ws, Wc and wac. Further, the storage battery power Wb1 supplied from the solar cell 3 is calculated by the following Equation (A) and storage battery power Wb2 supplied from the grid 2 is calculated by the following Equation (B).

In this case, Equation (A) is given on condition that the measured polarity of the bidirectional AC/DC power Ws is a minus polarity when the storage battery 43 is charged using solar light power generation. Further, Equation(B) is given on condition that the solar light-generated power Wv is 「 0 」.

[Equation 1]

$$Wb1 = \int Wvdt + \int Wsdt + \int Wcdt \qquad (A)$$

$$Wb2 = \int Wsdt + \int Wcdt \qquad (B)$$

The calculation control unit 55 determines from which of sources the storage battery power Wb has been obtained when power is charged in the storage battery 43, and calculates the sources from which the power contained in the storage battery 43 has been obtained and the extent of the power contained in the storage battery. For example, when the available capacity of the storage battery 43 is a maximum of 100% that is a chargeable capacity, percentages at which the grid power Wall and the solar light-generated power Wv are respectively stored, relative to the maximum percentage, are detected. Even when power is discharged from the storage battery 43, the calculation control unit 55 determines from which of sources the discharged power has been obtained and to what extent the amounts of power from the sources have been discharged. Further, the calculation control unit 55 writes records of the residual capacity of the storage battery 43 in memory 56, stores them in the memory 56, and updates stored values whenever the power sources of the storage battery 43 are checked. Further, the memory 56 constitutes a power source management means.

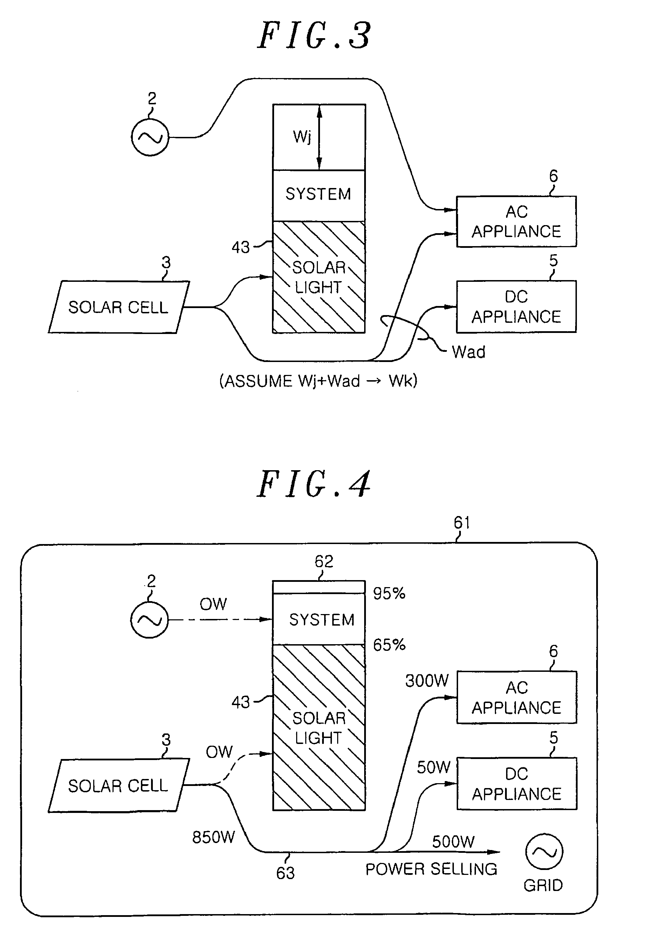

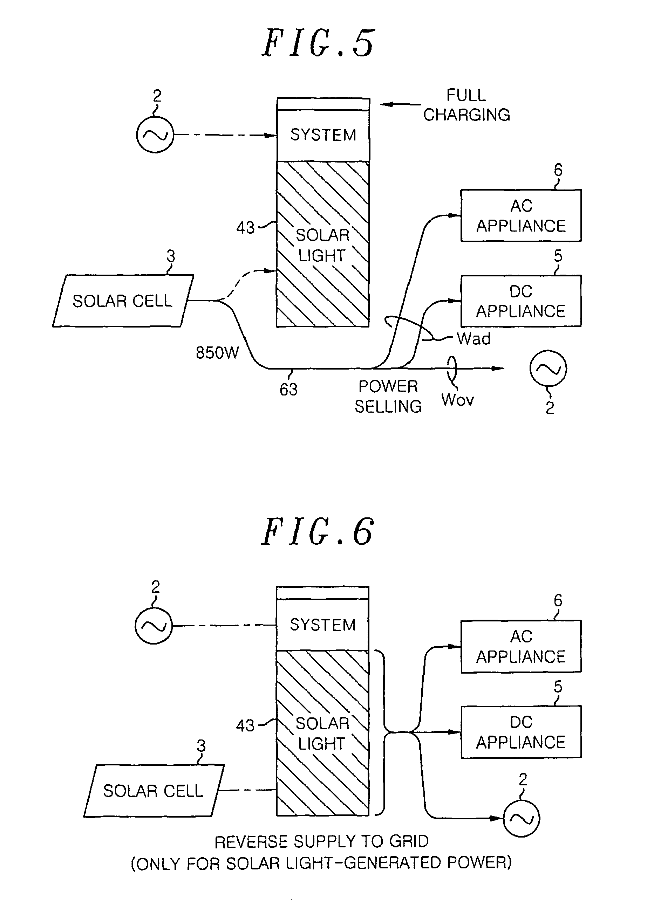

The control circuit 53 is provided with an independently generated power residual capacity calculation unit 57 for calculating the amount of surplus power, which is not used by the power supply system 1, of the solar light-generated power Wv. The independently generated power residual capacity calculation unit 57 calculates the amount of power, that is, the surplus power Wov (see Fig. 5), which is obtained by subtracting the amount of power consumed in charging the storage battery 43 (hereinafter referred to as "charging power Wj" (see Fig. 3)) and the amount of power supplied to the DC appliances 5 or the AC appliance 6 as operating power (hereinafter referred to as "total load power Wad" (see Figs. 3 and 5)) from the solar light-generated power Wv. Further, the independently generated power residual capacity calculation unit 57 corresponds to an independently generated power residual capacity calculation means.

As shown in Fig. 2, the control circuit 53 is provided with a power selling execution unit 58 for reversely supplying and selling the solar light-generated power Wv or the storage battery power Wb to the grid 2. The power selling execution unit 58 transmits the surplus power Wov, which is not consumed by the power supply system 1, of the solar light-generated power Wv, or the solar light-generated power Wv contained in the power of the storage battery 43, to the grid 2, and then allows the power to be sold to the grid 2. The power selling execution unit 58 checks the extent of the solar light-generated power Wv stored in the storage battery 43 by referring to the memory 56 when selling the power of the storage battery 43. The power selling execution unit 58 constitutes a power reverse supply means and a reverse supply permission means.

The control circuit 53 is provided with a display control unit 60 for displaying the status of the operation of the power supply system 1 on a display unit 59. The display control unit 60 visually displays sources from which the amounts of power contained in the storage battery 43 have been obtained, the extents to which respective amounts of power are contained in the storage battery 43, the extent to which the power from the grid 2 or the solar cell 3 flows through the various types of appliances 5 and 6, the extent to which the power of the power supply system 1 has been sold, etc. on the display unit 59. These values are displayed, for example, in pictures or the like so that they can be easily and visually imaged. Further, the display unit 59 is implemented as a color liquid crystal display and is installed, for example, in a home.

Next, the operation of the power supply system 1 of the present embodiment will be described with reference to Figs. 3 to 9.

As shown in Fig. 3, a situation is assumed in which the DC appliances 5 and the AC appliance 6 are operated using solar light-generated power Wv when solar light power generation is possible in the daytime and the storage battery 43 has been consumed to some degree. In this case, when the solar light-generated power Wv is less than the sum (hereinafter referred to as "total power Wk") of the charging power Wj required to fill an empty area of the storage battery 43, and the total load power Wad required to operate the appliances 5 and 6, the solar light-generated power Wv is consumed by the storage battery 43 and the appliances 5 and 6. Further, when the solar light-generated power Wv is insufficient, the insufficient power is supplemented with the grid power Wall.

In this case, the calculation control unit 55 determines the amount of the solar light-generated power Wv stored in the storage battery 43, and stores the determined amount in the memory 56. Therefore, it is determined from which of sources the power stored in the storage battery 43 has been obtained, and to what extent the power has been stored in the storage battery 43, that is, percentages (%) at which the solar light-generated power Wv and the grid power Wall have been respectively stored in the capacity of the storage battery 43.

Further, the display control unit 60 displays the operating status of the power supply system 1 on the display unit 59 via an operating status notification screen 61 shown in Fig. 4. In the operating status notification screen 61, a residual capacity indication 62 for the storage battery 43 is displayed to provide notification of sources from which the power contained in the storage battery 43 has been obtained and the extents to which the amounts of power from the sources are contained in the storage battery 43, or an energy flow indication 63 is displayed to show how much of the power from the solar cell 3 (grid 2) is sent to the appliances 5 and 6 and is to be sold to the grid 2. In the energy flow indication 63, the intensity of power is indicated according to, for example, the thickness of arrows.

In this case, as shown in Fig. 5, it is assumed that, for example, the storage battery 43 is fully charged or the number of appliances 5 and 6 that are used is reduced, and then the solar light-generated power Wv becomes greater than the total power Wk. When determining that the solar light-generated power Wv becomes greater than the total power Wk, the independently generated power residual capacity calculation unit 57 outputs both a difference between the two power values (surplus power Wov) and notification of power selling permission to the power selling execution unit 58. The power selling execution unit 58 reversely supplies and sells the surplus power Wov to the grid 2 in response to the notification from the independently generated power residual capacity calculation unit 57. That is, when a relationship of 「Wv > Ws+Wb+Wc」 is established, power of 「Wv-Ws-Wb-Wc」 is reversely supplied as the surplus power Wov.

Next, for example, as shown in Fig. 6, when the storage battery 43 has sufficient ability to supply power to the various types of appliances 5 and 6 in the state in which there remains sufficient storage battery 43 capacity in the night time, only the solar light-generated power Wv of the storage battery 43 is reversely supplied and sold to the grid 2. The power selling execution unit 58 calculates possible power to be reversely supplied on the basis of power storage records stored in the memory 56 when power is charged in the storage battery 43, and sells the possible power to, for example, an electric power company or the like.

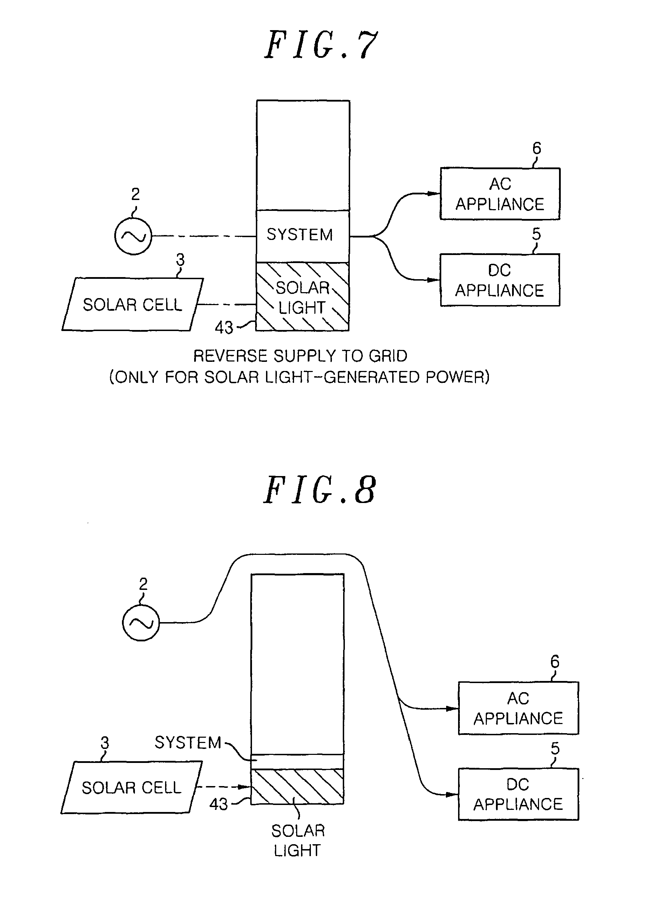

In this case, when the supply of power to the DC appliances 5 or the AC appliance 6 is required, the solar light-generated power Wv of the storage battery 43 is supplied to the appliances, as shown in Fig. 6, and natural energy is primarily used. Meanwhile, when the solar light-generated power Wv remaining in the storage battery 43 is insufficient, the grid power Wall of the storage battery 43 is used as power, as shown in Fig. 7. Further, the calculation control unit 55 gradually detects usage power consumed from the storage battery 43 and places where the power has been used, and updates the power storage records stored in the memory 56 whenever such detection occurs.

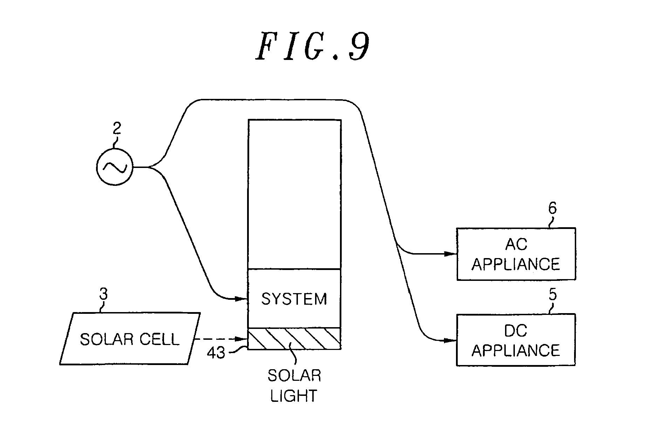

When a large amount of power of the storage battery 43 is consumed, the residual capacity of the storage battery 43 approaches a low limit, as shown in Fig. 8. However, one of the functions of the storage battery 43 is it being used as a backup power source in case of a grid power failure, so that there is a need to recover the residual capacity of the storage battery to a required minimum level. Therefore, when the residual capacity of the storage battery 43 is low, the control circuit 53 charges the storage battery 43. In this case, the solar light-generated power Wv is primarily used, and the storage battery 43 is charged with the grid power Wall, for example, in the nighttime or in bad weather, as shown in Fig. 9.

Meanwhile, in the present embodiment, when power is charged in the storage battery 43, a source from which the charging power Wj has been obtained and the extent to which the power Wj has been sent from the source are determined, and when the storage battery 43 is discharged, a source from which the power used for discharging has been obtained and the extent to which the power has been used are also determined. Therefore, it is possible to determine from which of sources the power stored in the storage battery 43 has been obtained and to what extent the power has been stored. For this reason, it is possible to more effectively use natural energy such as solar light in the present embodiment in such a way as to primarily use the solar light-generated power Wv contained in the storage battery 43.

In accordance with the configuration of the embodiment, the following advantages can be obtained.

(1) Since the charging/discharging of the storage battery 43 is managed having incorporated the sources of power, it is possible to determine sources from which amounts of power stored in the storage battery 43 have been obtained and the extents to which the amounts of power have been stored. Therefore, if the solar light-generated power Wv is primarily used when the storage battery 43 is discharged, power requiring no power rate is primarily consumed, thus realizing very high energy saving effects.

(2) When the power supply system 1 operates using the solar light-generated power Wv as power, surplus power Wov of the power Wv, which is not consumed by the power supply system 1, can be sold. Therefore, since it is impossible to, for example, charge the storage battery 43 with the grid 2 in the nighttime when the power rate is low, and sell this power in the daytime when the power rate is high, desirable power that can be sold may be sold to an electric power company or the like according to a formal procedure.

(3) The solar light-generated power Wv of the power in the storage battery 43 can be sold. Therefore, power that is independently generated by the power supply system 1 and that is not a target to be improperly sold can be sold to the electric power company in a desirable time span in which the electric power company requires power. That is, the power stored in the storage battery 43 can be sold without creating an impropriety.

(4) If the solar light-generated power Wv is primarily used when the power of the storage battery 43 is used, there is no need to use as much grid power Wall relative to the power rate as possible, thus enabling natural energy to be effectively used.

(5) Since the operating status notification screen 61 can be displayed on the display unit 59, visual notification can be provided to a user in relation to a source from which power stored in the storage battery 43 has been obtained, the extent to which the power has been stored in the storage battery 43, the extent to which power from the grid 2 or the solar cell 3 flows through various types of appliances 5 and 6, and the degree to which the power of the system 1 is sold.

Further, the embodiment is not limited to the above-described configuration and may be modified into the following forms:

The monitoring means is not limited to the power detection units 49 to 52 for indicating values depending on power, and any type of means may be used as long as it can indicate the charging source of the storage battery 43 and the amount of power thereof.

The grid power Wall of the power stored in the storage battery 43 may be prohibited from being sold.

The selling of power may be prohibited, for example, in the nighttime, without being able to be freely executed regardless of it being nighttime or daytime.

The independently power generating battery is not limited to the solar cell 3, and may be, for example, a fuel cell.

The storage battery 43 is not limited to a battery implemented as a secondary battery, a condenser, or the like and any type of storage battery may be employed as long as it can collect charges.

The power supply system 1 is not limited to a house, and may be applied to, for example, other buildings such as a factory.

The grid 2 is not limited to the commercial AC power source, and any type of source that supplies a DC voltage can also be used.

Next, the technical spirit that can be understood from the above embodiment and other embodiments will be additionally described together with the advantages thereof.

There is provided a power line communication control unit for supplying power and data to a load via power line communication and controlling the load. According to this configuration, since the load can be controlled using power line communication, power and data can be supplied to the load using a small amount of wiring.

While the invention has been shown and described with respect to the embodiments, it will be understood by those skilled in the art that various changes and modification may be made without departing from the scope of the invention as defined in the following claims.

**Claims**

1.  A device for monitoring power sources of a storage battery, comprising:

    a monitoring unit for monitoring input and output of power to and from a storage battery; and
    a power source management unit for managing sources from which amounts of power stored in the storage battery have been obtained and extents to which the amounts of power have been stored in the storage battery.

2.  The device of claim 1, wherein the device for monitoring power sources of the storage battery is applied to a power supply system which performs voltage conversion on a voltage obtained from a grid or an independently power generating cell, and branches and supplies the voltage to individual appliances, and which is provided with the storage battery as a backup power source of the grid or the independently power generating cell.

3.  The device of claim 2, further comprising:

    an independently generated-power residual capacity calculation unit for calculating surplus power, which remains in the power supply system, of power generated by the independently power generating cell; and
    a power reverse supply unit for reversely supplying the surplus power to the grid.

4.  The device of claim 2 or 3, further comprising a reverse supply permission unit for permitting power, which is supplied from the independently power generating cell as a source, of the power stored in the storage battery, to be reversely supplied to the grid.

*FIG.1*

EP 2 475 068 A1

FIG.2

# FIG. 3

(ASSUME Wj+Wad → Wk)

# FIG. 4

# FIG.5

FULL
CHARGING

2

SYSTEM

6

AC
APPLIANCE

43

SOLAR
LIGHT

3

SOLAR CELL

850W

63

5

DC
APPLIANCE

Wad

POWER
SELLING

Wov

2

# FIG.6

2

SYSTEM

6

AC
APPLIANCE

43

SOLAR
LIGHT

3

SOLAR CELL

5

DC
APPLIANCE

2

REVERSE SUPPLY TO GRID
(ONLY FOR SOLAR LIGHT-GENERATED POWER)

# FIG.7

REVERSE SUPPLY TO GRID
(ONLY FOR SOLAR LIGHT-GENERATED POWER)

# FIG.8

# FIG.9

SYSTEM

SOLAR
LIGHT

SOLAR CELL

2

3

43

6
AC
APPLIANCE

5
DC
APPLIANCE

<table>
<tr><td colspan="2"><b>INTERNATIONAL SEARCH REPORT</b></td><td>International application No.<br>PCT/IB2010/002430</td></tr>
</table>

| A. CLASSIFICATION OF SUBJECT MATTER |
|---|
| *H02J7/35*(2006.01)i, *H01M10/48*(2006.01)i, *H02J3/38*(2006.01)i |

According to International Patent Classification (IPC) or to both national classification and IPC

| B. FIELDS SEARCHED |
|---|

Minimum documentation searched (classification system followed by classification symbols)
H02J7/35, H01M10/48, H02J3/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 64-50723 A (Mitsubishi Electric Corp.),<br>27 February 1989 (27.02.1989),<br>page 2, upper right column, lines 7 to 10;<br>page 3, upper right column, line 11 to lower<br>left column, line 13; fig. 1, 2<br>(Family: none) | 1<br>2,3 |
| Y<br>A | JP 2009-33802 A (Fujipream Corp.),<br>12 February 2009 (12.02.2009),<br>paragraphs [0005] to [0008], [0029] to [0033]<br>(Family: none) | 2,3<br>4 |
| P,X | JP 2010-128525 A (Sekisui Chemical Co., Ltd.),<br>10 June 2010 (10.06.2010),<br>paragraph [0068]<br>(Family: none) | 1 |

| ☐ Further documents are listed in the continuation of Box C. | ☐ See patent family annex. |
|---|---|

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>21 January, 2011 (21.01.11) | Date of mailing of the international search report<br>01 February, 2011 (01.02.11) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009159690 A